# EUROPÄISCHE PATENTSCHRIFT

(11) **EP 3 347 556 B1**
(45) Veröffentlichungstag und Bekanntmachung des Hinweises auf die Patenterteilung: **19.08.2020**
(21) Anmeldenummer: 16781281.7
(22) Anmeldetag: 07.09.2016
(51) Int. Cl.: E05F 15/643, E05F 15/655

(54) **SCHIEBETÜRANTRIEB EINES KRAFTFAHRZEUGS**
SLIDING DOOR DRIVE OF A MOTOR VEHICLE
ENTRAÎNEMENT DE PORTE COULISSANTE DE VÉHICULE AUTOMOBILE

(30) Priorität: 10.09.2015 DE 102015115222
(43) Veröffentlichungstag der Anmeldung: 18.07.2018
(73) Patentinhaber: Kiekert AG, 42579 Heiligenhaus (DE)
(72) Erfinder: HAUBS, Rainer, 46562 Voerde (DE); CHILLA, Rainhard, 42549 Velbert (DE)
(86) Internationale Anmeldenummer: PCT/DE2016/100413
(87) Internationale Veröffentlichungsnummer: WO 2017/041789

(56) Entgegenhaltungen:
- EP-A1- 2 907 954
- GB-A- 2 311 809
- JP-A- 2001 115 736
- US-A1- 2004 195 419

## Beschreibung

Die Erfindung betrifft einen Antrieb für eine Schiebetür eines Kraftfahrzeugs gemäß dem Oberbegriff des Anspruchs 1.

Um die Bedienung einer Schiebetür in einem Kraftfahrzeug zu erleichtern, insbesondere um die Bedienung zum Beispiel für Kinder zu erleichtern, werden Schiebetüren mit Antrieben ausgestatteten, so dass lediglich eine Initialisierung stattfinden muss, um die Schiebetür zu öffnen oder zu schließen. Eine Initialisierung kann dabei mittels einer Funkversteuerung oder eines Drucktasters bzw. Schalters erfolgen. Zumeist wird die Schiebetür mittels eines elektrischen Antriebs geschlossen oder geöffnet. Dabei gleitet die Schiebetür zumeist in Führungsschienen entlang des Kraftfahrzeugs und bewegt sich gegenüber der Karosserie.

Da die Schiebetüren auch große Öffnungen, wie beispielsweise bei Transportern freigeben und verschließen, muss einerseits ein entsprechender Antrieb mit einer entsprechenden Leistung bereitgestellt werden und es muss sichergestellt sein, dass die Mittel zum Antreiben der Schiebetür diese Kraft entsprechend übertragen können. Ist einerseits die Kraftübertragung und Bereitstellung wichtig, ist andererseits auch eine Führung der Kraftübertragungsmittel und dessen Einbau im Kraftfahrzeug ein wichtiger Bestandteil für eine dauerhafte Funktion der Schiebetür. Um diesen Anforderungen gerecht zu werden, sind verschiedene Antriebssysteme und Montageausbildungen bekannt geworden.

So offenbart die DE 10 2006 046 602 A1 einen Antrieb für eine Schiebetür für ein Kraftfahrzeug, wobei die Schiebetür mittels eines Antriebsseils entlang einer Führungsbahn bewegbar ist. Das Antriebsseil wird mittels einer elektrischen Motorgetriebeeinheit auf einer Seiltrommel auf- und abgewickelt. Ein jeweiliges Ende des Antriebsseils zieht dabei die Schiebetür entweder in Öffnungs- oder in Schließrichtung. Um eine ordnungsgemäße Krafteinleitung in beide Bewegungsrichtungen zu ermöglichen, ist das Antriebsseil über Umlenkeinrichtungen geführt. An der jeweiligen antriebsseitigen Umlenkeinrichtung wird das betreffende Antriebsseil um ca. 90° umgelenkt und geht von seinem Verlauf in Längsrichtung des Kraftfahrzeugs in einen solchen in Querrichtung über, um dann in die Führungsbahn einzutauchen. Die Antriebseinheit und die an den jeweiligen Enden der Antriebseinheit befindlichen Umlenkeinrichtungen sind als eine einheitliche Baugruppe ausgebildet, so dass ein sicheres Umlenken wie auch ein Bereitstellen der notwendigen zur Bewegung der Schiebetür notwendigen Kraft bereitstellbar ist.

Aus der DE 10 2006 046 569 A1 ist ebenfalls ein elektrischer Antrieb für eine Schiebetür eines Kraftfahrzeugs bekannt geworden. Der Schiebetürantrieb umfasst einen Elektromotor, der mit einem Planetengetriebe zusammenwirkt und der eine Seiltrommel antreibt, mittels der das Antriebsseil aufwickelbar ist und in beide Bewegungsrichtungen der Schiebetür eine Kraft auf die Schiebetür ausgeübt werden kann. Zudem wird das Antriebsseil über Umlenkeinrichtungen geführt, so dass die Schiebetür in beide Bewegungsrichtungen mittels des Antriebsseils hin- und herziehbar ist. Damit eine Kraft auf das flexible Antriebsmittel aufbringbar ist, muss das Antriebsseil bzw. das flexible Antriebsmittel an den jeweiligen Umlenkeinrichtungen sicher geführt und fest mit der Karosserie verbunden sein. Die Antriebseinrichtung ist dazu als einheitliche Baueinheit ausgeführt und wird entsprechend als komplette Baueinheit montiert. Durch die Ausbildung einer festen Baueinheit ist ein sicheres Hin- und Herziehen der Schiebetür gewährleistet.

Da die Entfernungen, das heißt der Weg der Bewegung der Schiebetür bei großen Türen auch lang sein kann, ist es je nach Ausführungsform und Breite bzw. Größe der Schiebetür notwendig, zumindest eine Umlenkeinrichtung in einem großen Abstand zur Antriebseinheit im Kraftfahrzeug zu montieren. Insbesondere das Einbauen der weit beabstandeten Umlenkeinrichtung und das Führen zwischen dem Fahrzeugaußen- und -innenblech kann dabei mit Aufwand verbunden sein.

US 2004 0 195 419 A1 bildet die Basis für den Oberbegriff des Anspruchs 1 und beschreibt eine Öffnungs- und Schließ-Vorrichtung 4 zum Öffnen und Schließen einer Schiebetür 1, welche an einem Fahrzeugkörperpaneel 2 beweglich angebracht ist. Diese Vorrichtung 4 umfasst eine Kabelantriebseinheit 8, ein Kabel 10 und ein Kabelführungsglied 16. Die Kabelantriebseinheit 8 ist an einer innenliegenden Seitenplatte (+Y-Seite) des Fahrzeugkörperpaneels 2 angeordnet. Das Kabel 10 hat einen mittleren Abschnitt, der um eine drehbare Trommel 9 der Kabelantriebseinheit 8 zu wickeln ist, und zwei Endabschnitte, die mit der Schiebetüre 1 zu verbinden sind. Das Kabelführungsglied 16 ist in der Nachbarschaft eines Frontendabschnittes (+X-Seite) der Führungsschiene 3 des Fahrzeugkörperpaneels 2 angeordnet. Das Kabelführungsglied 16 ändert die Verlaufsrichtung des Kabels 10 nach hinten im Fahrzeug. Eine Kabelhülle 18 ist eine flexible Rohrleitung und besitzt einen Frontendbereich (+X-Seite), der an dem ersten Kabelführungsglied 16 fixiert ist. Das sich von der drehbaren Trommel 9 in Richtung zum Vorderende (+X-Seite) des Fahrzeugs erstreckende Kabel 10 verschiebbar in der Kabelhülle 18 geführt.

Das Kabelführungsglied 16 ist an der inneren Seitenplatte (+Y-Seite) des Fahrzeugkörperpaneels 2 angeordnet und nahe an einem Frontende (+X-Seite) der Führungsschiene 3 positioniert. Das Kabelführungsglied 16 weist ein Gehäuse 161, eine Riemenscheibe 162, eine Welle 163, eine Abdeckung 164 und eine Kabeltülle 165 auf. Das Gehäuse 161 besteht aus einem harten Kunstharz und ist an dem Fahrzeugkörperpaneel 2 mit Bolzen befestigt. Das Gehäuse 161 besitzt einen zentralen Bereich, in welchem ein Behälterabschnitt 161a derart geformt, dass er zur Außenseite des Fahrzeugs (-Y-Seite) konkav ist. Die Riemenscheibe 162 führt das Kabel 10, das aus dem Frontende der Kabelhülle 18 austritt, von der inneren Seitenplatte zu der äußeren Seitenplatte des Fahrzeugkörperpaneels 2. Die Welle 163 erstreckt sich in vertikaler Richtung (Z-Achse) des Fahrzeugs. Die Riemenscheibe 162 wird drehbar mit der Welle 163 abgestützt. Die Abdeckung 164 besteht aus einem Kunstharz und ist an dem Gehäuse 161 fixiert. Die Abdeckung 164 schließt eine Öffnung des Behälterabschnitts 161a, um die Riemenscheibe 162 abzudecken. Die Kabeltülle 165 besteht aus einem elastischen Material, wie beispielsweise Gummi, und ist an dem Bodenbereich (-Y-Seite) des Gehäuses 161 angebracht und ragt zu der Führungsschiene 3 hin.

Das Gehäuse 161 hat beiderseitige Endbereiche, an welchen Befestigungssegmente 161b geformt sind. Die Befestigungssegmente 161b sind mit Bolzen an dem Fahrzeugkörperpaneel 2 festgelegt. Ferner besitzt das Gehäuse 161 eine Mittelbereichsseite (-X-Seite), in der eine erste Kabelhüllen-Einpassnut 161c geformt ist. Ein Frontendabschnitt 18a der Kabelhülle 18 ist in die Kabelhüllen-Einpassnut 161c eingesetzt. Ferner weist das Gehäuse 161 Welleneinpassnuten 161d auf, in welchen beide Endabschnitte der Welle 163 im Behälterabschnitt 161a abgestützt sind.

Das Kabelführungsglied 16 ist an dem Fahrzeugkörperpaneel 2 befestigt, indem der Bodenbereich des Gehäuses 161 in eine Durchgangsbohrung des Fahrzeugkörperpaneels 2 eingepasst ist. In dem Bodenabschnitt des Gehäuses 161 ist ein Kabeleinsetzloch 161e zum Führen des Kabels 10 von der inneren Seitenplatte zu der äußeren Seitenplatte des Fahrzeugkörperpaneels 2 ausgebildet. Das Kabeleinsetzloch 161e ist mit der Kabeltülle 165 verschlossen. Das Kabel 10 ist verschiebbar in der Kabeltülle 165 geführt. Die Kabeltülle 165 verformt sich flexibel, um der Bewegung des Kabels 10 als Folge der Bewegung der Schiebetüre 1 zu folgen.

Die Abdeckung 164 weist einen Innenwandabschnitt 164b und einen Kabelhüllenhalteabschnitt 164c auf. Der Innenwandabschnitt 164b ist in der Form eines Bogens ausgebildet und liegt der äußeren Umfangsfläche der Riemenscheibe 162 gegenüber. Der Kabelhüllenhalteabschnitt 164c ist mit dem in die Kabelhülleneinpassnut 161c eingepassten Frontendabschnitt 18a der Kabelhülle 18 gekuppelt, um auf den Frontendabschnitt 18a auf die Kabelhülleneinpassnut 161c zu drücken. Die Abdeckung 164 deckt die Riemenscheibe 162 ab und verschließt auch eine Öffnung des Behälterabschnitts 161a, indem die Abdeckung 164 an dem Gehäuse 161 festgelegt wird.

Bei dieser bekannten Öffnungs- und Schließ-Vorrichtung 4 ist die Kabeltülle 165 einstückig, ist die Welle 163 an der inneren Seitenplatte (+Y-Seite) des Fahrzeugkörperpaneels 2 angeordnet und ist die Riemenscheibe 162 von dem Gehäuse 161 und der Abdeckung 164 umfasst.

EP 2 907 954 A1 beschreibt einen Schiebetür-Öffnungs- und Schließ-Mechanismus 16 zum öffnen und Schließen einer auf einer Seite 12 einer Fahrzeugkarosserie 11 angeordneten Schiebetür 13. Die Schiebetür 13 öffnet und schließt einen auf der Seite 12 gebildeten Öffnungsabschnitt 12a. Die Schiebetür 13 hat eine Rolleneinheit 14, die von einer Führungsschiene 15 geführt wird, die so an der Fahrzeugkarosserie 11 angeordnet ist, dass sie sich in Fahrtrichtung von vorne nach hinten erstreckt. Der Mechanismus 16 umfasst ein Kabel 18, dessen eines Ende mit der Rolleneinheit 14 verbunden ist, eine Riemenscheibenvorrichtung 20 und eine Antriebseinheit 21, die das Kabel 18 zieht. Die Antriebseinheit 21 ist an der Abteilseite einer Karosserieplatte 11a der Karosserie 11 befestigt. Die Riemenscheibenvorrichtung 20 ist ebenfalls an der Abteilseite der Karosserieplatte 11a befestigt. Zwischen der Antriebseinheit 21 und der Riemenscheibenvorrichtung 20 ist ein flexibles Außenrohr 27 vorgesehen, das das Kabel 18 so ummantelt, dass es in dem Außenrohr 27 verschiebbar ist. An einem Ende des Außenrohrs 27 ist eine Kappe 29 aus Harz angebracht. Dieses eine Ende des Außenrohrs 27 wird über die Kappe 29 an der Riemenscheibenvorrichtung 20 befestigt. Die Riemenscheibenvorrichtung 20 ändert die Richtung des von der Führungsschienenseite der Karosserieplatte 11a zur Abteilseite geführten Kabels 18 durch eine an der Karosserieplatte 11a ausgebildete Öffnung 11b um etwa 90°. Die Riemenscheibenvorrichtung 20 hat einen Gehäusekörper 40 aus Harz, einen Gehäusedeckel 50 aus Harz, eine Riemenscheibenwelle 70 aus Metall, eine Riemenscheibe 80 aus Harz und einen Dichtungsdeckel 90 aus Gummi.

Der Gehäusekörper 40 ist zusammen mit dem Gehäusedeckel 50 zu einem Riemenscheibengehäuse CA zusammengebaut und durch Spritzgießen eines Harzmaterials, wie z. B. Kunststoff, in eine Tafelform gebracht. An einem Teil des Gehäusekörpers 40 ist ein Kabeleinführschlitz 46 so ausgebildet, dass er sich in Längsrichtung des Gehäusekörpers 40 erstreckt. Die Riemenscheibe 80 ist drehbar im Riemenscheibengehäuse CA angeordnet. Die Karosserieplatte 11a ist eine Doppelkonstruktion mit einer Innenwand auf der Abteilseite und einer Außenwand auf der Führungsschienenseite. Der Gehäusedeckel 50 ist durch Spritzgießen eines Harzmaterials, wie z. B. Kunststoff, in eine Kastenform gebracht. Der Gehäusedeckel 50 deckt den Gehäusekörper 40 dicht ab und ist so angeordnet, dass die Riemenscheibenvorrichtung 20 an der Abteilseite der Karosserieplatte 11a befestigt ist. Der Gehäusedeckel 50 hat einen Körper 51 und eine äußere Umfangswand 52. Beide Enden der Riemenscheibenwelle 70 sind am Gehäusekörper 40 bzw. am Gehäusedeckel 50 zur Abstützung der Riemenscheibenwelle 70 befestigt.

Der Dichtungsdeckel 90 ist durch Spritzgießen eines elastischen Materials, wie z. B. Gummi, in eine vorgegebene Form gebracht und hat einen Befestigungskörperteil 91, einen Plattenklebeteil 92 und einen Balgteil 93. Der Befestigungskörperteil 91 ist an dem Teil des Gehäusekörpers 40 befestigt, an dem der Kabeleinführungsschlitz 46 ausgebildet ist, und der Plattenklebeteil 92 ist zur Abdeckung der Öffnung 11b auf die Außenwand der Karosserieplatte 11a geklebt. Das Kabel 18 kommt in Gleitkontakt mit dem Balgteil 93, das durch elastische Verformung gegenüber dem Befestigungskörperteil 91 und dem Plattenklebeteil 92 frei schwingt.

Der Schiebetür-Öffnungs- und Schließ-Mechanismus 16 einschließlich der Riemenscheibenvorrichtung 20 wird von einem Fahrzeughersteller an einem vorbestimmten Teil des Fahrzeugs 10 montiert.

Bei diesem bekannten Schiebetür-Öffnungs- und Schließ-Mechanismus 16 ist der Dichtungsdeckel 90 einstückig, ist die Riemenscheibenwelle 70 an der Innenwand der Karosserieplatte 11a angeordnet und ist die Riemenscheibe 80 von dem Riemenscheibengehäuse CA umfasst.

GB 2 311 809 A beschreibt eine Dichtungsbefestigungsstruktur für eine angetriebene Schiebevorrichtung für eine Fahrzeugtür 5. Die Schiebevorrichtung umfasst eine längliche Führungsschiene 3, eine Schiebetür 5, eine angetriebene Schiebeeinheit 8, ein Drahtseil 10, einen Riemenscheibenhalter 31, ein Kabelloch 17 und ein flexibles Dichtungselement 18 aus Gummi.

Die Führungsschiene 3 ist an einer Außenfläche einer Seitenwand 15 einer Fahrzeugkarosserie 1 befestigt. Die Schiebetür 5 ist an der Fahrzeugkarosserie 1 angebracht und entlang der Führungsschiene 3 verschiebbar. Die Schiebeeinheit 8 ist an einer Innenseite der Seitenwand 15 angeordnet. Das Drahtseil 10 ist zwischen der Schiebetür 5 und der Schiebeeinheit 8 vorgesehen. Der Riemenscheibenhalter 31 ist in der Nähe eines Endes der Führungsschiene 3 vorgesehen und weist eine Riemenscheibe 6 auf, um die das Drahtseil 10 gelegt ist. Das Kabelloch 17 ist an der Seitenwand 15 in der Nähe des Endes der Führungsschiene 3 ausgebildet, um das Drahtseil 10 durch die Seitenwand 15 zu führen. Das Dichtungselement 18 ist in dem Kabelloch 17 angebracht, um einen Spalt zwischen dem Kabelloch 17 und dem Drahtseil 10 zu schließen. Der Riemenscheibenhalter 31 ist an der Seitenwand 15 befestigt. Das Dichtungselement 18 weist einen Einführungsabschnitt 19, der in das Kabelloch 17 eingeführt ist, und einen Abschnitt 35 mit großem Durchmesser aufweist, der einen Durchmesser aufweist, der größer als der des Kabellochs 17 ist und an der Innenseite der Seitenwand 15 anliegt, wenn der Einführungsabschnitt 19 in das Kabelloch 17 eingeführt ist. Der Abschnitt 35 mit großem Durchmesser ist fest zwischen dem Riemenscheibenhalter 31 und der Seitenwand 15 angeordnet.

Die Schiebetür 5 hat einen Rollenhalter 4, der gleitend mit der Führungsschiene 3 in Eingriff steht. Die Endstücke 30 des Drahtseils 10 sind mit dem Rollenhalter 4 verbunden. Das Kabel 10 ist im Bereich zwischen dem Riemenscheibenhalter 31 und der Schiebeeinheit 8 mit einem Kabelmantel 9 abgedeckt. Das Dichtungselement 18 umfasst einen Flansch 36, der am Ende des Einführungsabschnitts 19 ausgebildet ist. Der Flansch 36 greift elastisch an dem Rand des Loches 17 an, so dass das Dichtungselement 18 vorübergehend an dem Loch 17 befestigt ist. Der Riemenscheibenhalter 31 hat ein Haltergehäuse 23, das eine an der Seitenwand 15 anliegende Auflagefläche 38 und eine Ausnehmung 39 zur Aufnahme des Abschnitts 35 mit großem Durchmesser aufweist. Das Haltergehäuse 23 besteht aus einem Metall oder einem Kunstharz mit ausreichender Festigkeit. Bei der Befestigung des Haltergehäuses 23 an der Fahrzeugkarosserie 1 wird der Abschnitt 35 mit großem Durchmesser durch eine Druckfläche 40 der Ausnehmung 39 stark gegen die Seitenwand 15 gedrückt, so dass das Dichtungselement 18 fest und endgültig zwischen der Seitenwand 15 und dem Haltergehäuse 23 gehalten wird. So kann durch die Befestigung des Haltergehäuses 23 an der Fahrzeugkarosserie 1 das Dichtungselement 18 endgültig fixiert werden.

Bei dieser bekannten Schiebevorrichtung ist das Dichtungselement 18 an der Seitenwand 15 montiert, ist die Welle der Riemenscheibe 6 an der Innenseite der Seitenwand 15 angeordnet und ist die Riemenscheibe 6 von dem Haltergehäuse 23 umfasst.

JP 2001 115 736 A beschreibt ein motorbetriebenes Öffnungs- und Schließ-System für eine Schiebetür 2 eines Fahrzeugs 1. Das System weist einen Mechanismusteil 4 auf, der eine Riemenscheibeneinheit 6, eine Kabelantriebseinheit 8 und eine Kabeleinheit 9 umfasst. Die Schiebetür 2 hat eine Rolleneinheit 17, die in einer Schiene 3 in einer Außenwand 46 der Karosserie läuft. Die Riemenscheibeneinheit 6 ist in der Nähe des vorderen Endes der Schiene 3 angeordnet und wird an der Außenwand der Karosserie befestigt. Eine Kabelführung 24 der Kabeleinheit 9 erstreckt sich von der Riemenscheibeneinheit 6 nach hinten und ist mit der Kabelantriebseinheit 8 verbunden. Ein Kabel 26 kommt aus der Kabelantriebseinheit 8, ist durch die Kabelführung 24 geführt und erreicht die Riemenscheibeneinheit 6, wo es aus Kabelführung 24 austritt, sich um ca. 120° dreht und durch die Nut der Schiene 3 verläuft. Das Kabel 26 ist an seinem einen Ende mit dem Endenhalter der Rolleneinheit 17 in Eingriff gebracht.

Die Riemenscheibeneinheit 6 weist einen Halter 31 aus Metall, eine Welle 32, eine Riemenscheibe 33, eine Riemenscheibenabdeckung 34 und eine Kabeldurchführung 35 aus Gummi oder Weichharz auf. Der Halter 31 ist an der Karosserie befestigt. Ein äußeres Ende 41 ist an einem Endabschnitt der Kabelführung 24 befestigt. Im Halter 31 sind eine Bohrung 42 zum Durchführen der Welle 32 und eine Kerbe 43 zum Durchführen des äußeren Endes 41 ausgebildet. Die Riemenscheibe 33 hat eine Bohrung 33a, durch die die Welle 32 verläuft.

Die Riemenscheibenabdeckung 34 ist ein kastenförmiges Formteil aus Kunstharz und hat an einem Ende eine Öffnung 34a zum Einsetzen der Riemenscheibe 33 und in der oberen und unteren Wandung ein Durchgangsloch 34b zum Durchführen der Welle 32. Weiterhin ist der hintere Teil der Riemenscheibenabdeckung 34 etwas verdickt, und in diesem Teil ist ein Loch 34c ausgebildet, in dem ein Gummistopfen 45 und die Spitze des äußeren Endes 41 sitzen. Weiterhin ist in dem hinteren Teil ein Durchgangsloch 34d vorgesehen, durch das das Kabel 26 verläuft. Im Gummistopfen 45 ist eine Durchgangsbohrung für die Durchführung des Kabels 26 ausgebildet. Die Öffnung 34a ist mit der Kabeldurchführung 35 verschlossen. Die Kabeldurchführung 35 hat eine schlitzförmige Ein-/Ausgangsöffnung 35a, durch die das Kabel 26 verläuft, und ihr Umfang hat eine Nut 35b, die mit einem kleinen Fenster in der Außenwand 46 der Fahrzeugkarosserie in Eingriff steht. Die Riemenscheibe 33 ist in die Riemenscheibenabdeckung 34 eingesetzt, die Riemenscheibenabdeckung 34 ist in den Halter 31 eingesetzt, und die Welle 32 ragt durch die Bohrungen 42, die Durchgangslöcher 34b und die Bohrung 33a. Das Kabel 26, die Kabelführung 24 und der Gummistopfen 45 sind vor dem Einsetzen der Riemenscheibe 33 an der Riemenscheibenabdeckung 34 angebracht worden. Als letztes ist die Kabelführung 35 an der Riemenscheibenabdeckung 34 angebracht worden.

Bei diesem bekannten Öffnungs- und Schließ-System ist der Gummistopfen 45 in das Loch 34c der Riemenscheibenabdeckung 34 eingeschoben, ist die Welle 32 der Riemenscheibe 33 an der Innenseite der Seitenwand 46 angeordnet und ist die Riemenscheibe 33 von der Riemenscheibenabdeckung 34 umfasst.

Ein Problem, das sich bei der Entwicklung von Schiebetürantrieben stellt, ist somit, dass einerseits genügend Kraft zur Verfügung gestellt wird, dass andererseits die Kraft ordnungsgemäß an die zu bewegende Schiebetür weitergeleitet werden muss und darüber hinaus ein leichter Einbau der Antriebseinheit in die Karosserie des Kraftfahrzeugs gewährleistet werden muss.

Aufgabe der Erfindung ist es, einen verbesserten Schiebetürantrieb bereitzustellen. Darüber hinaus ist es Aufgabe der Erfindung, einen Schiebetürantrieb für ein Kraftfahrzeug bereitzustellen, der ein sicheres Umlenken der zur Bewegung der Schiebetüren benötigten Kräften ermöglicht und der andererseits leicht im Kraftfahrzeug zu montieren ist. Darüber hinaus ist es Aufgabe der Erfindung, eine konstruktiv einfache und kostengünstige Möglichkeit zur Bewegung und zum Antreiben einer Schiebetür eines Kraftfahrzeugs bereitzustellen.

Die Lösung der Aufgabe erfolgt erfindungsgemäß durch die Merkmale des unabhängigen Patentanspruchs 1. Vorteilhafte Ausgestaltungen der Erfindung sind in den Unteransprüchen angegeben. Es wird darauf hingewiesen, dass die im Folgenden beschriebenen Ausführungsbeispiele nicht beschränkend sind, es sind vielmehr beliebige Variationsmöglichkeiten der in der Beschreibung, den Unteransprüchen und den Zeichnungen beschriebenen Merkmale möglich.

Die Erfindung schlägt einen Antrieb einer Schiebetür eines Kraftfahrzeugs vor, aufweisend
- eine elektrische Antriebseinheit,
- ein Antriebsseil,
- eine Seilührung für das Antriebsseil,
wobei
- die Antriebseinheit, das Antriebsseil und die Seilührung fest in einer Karosserie des Kraftfahrzeugs aufgenommen sind;
- die Schiebetür mittels des Antriebsseils gegenüber der Karosserie bewegbar ist;
- zumindest eine Baugruppe der Seilführung modular aufgebaut ist;
- das Antriebsseil über die Baugruppe umlenkbar ist;
- ein Seilende des Antriebsseils in eine Seilumlenkung einfädelbar ist;
- die Seilführung ein Führungsrohr aufweist;
- das Ende des Führungsrohrs mittels eines Oberteils an der Seilumlenkung fixierbar ist;
- ein Dichtungsteil derart an der Seilumlenkung montiert ist, dass mittels der Seilumlenkung das Antriebsseil aus der Karosserie herausführbar ist;
- die Baugruppe die Seilumlenkung, das Oberteil und das Dichtungsteil aufweist;
- das Antriebsseil ein Dichtungsmittel in Form einer profilierten Ringscheibe aufweist, das mit dem Dichtungsteil eine Dichteinheit bildet;
- das Dichtungsmittel in eine Öffnung des Dichtungsteils eingeschoben ist.

Durch den modularen Aufbau der Antriebseinheit der Schiebetür ist nun die Möglichkeit geschaffen, einerseits eine sichere Umlenkung der zur Bewegung der Tür benötigten Kraft bereitzustellen und andererseits ein leichtes Montieren der Schiebetürantriebseinheit zu ermöglichen. Die Ausbildung der Umlenkeinheit als separate Baugruppe und in Form eines Moduls bietet dabei die Möglichkeit, die Baugruppe Seilumlenkung separat und nach einem Einbau des Schiebetürantriebs am Antrieb und Kraftfahrzeug zu montieren. Dadurch muss die vom Antrieb beabstandete Umlenkeinrichtung nicht während des Einbaus zwischen dem Außen- und Innenblech des Fahrzeugs geführt werden, sondern es muss lediglich die Motorgetriebeeinheit montiert werden.

Als Antrieb einer Schiebetür eines Kraftfahrzeugs wird bevorzugt ein elektromotorischer Antrieb angesehen, der in der Lage ist, ein Antriebsseil derart zu führen, wickeln und anzutreiben, dass damit eine Schiebetür entlang und in Bezug auf eine Karosserie eines Kraftfahrzeugs in einer Führungsbahn bewegt werden kann. Vorzugsweise ist der Antrieb mit einem Getriebe und noch bevorzugter mit einem Planetengetriebe ausgestattet, so dass die für eine Bewegung der Schiebetür notwendige Kraft bereitgestellt werden kann.

Darüber hinaus bietet der Einsatz eines Planetengetriebes die Möglichkeit, den elektrischen Antrieb vom Seil und somit von der Schiebetür zu entkoppeln. Dies kann beispielsweise dann vorteilhaft sein, wenn bei einem Stromausfall die Schiebetür manuell bewegt werden soll oder muss. Vorteilhafterweise bietet sich ein elektrischer Antrieb in Form eines Elektromotors an, da elektrische Energie im Kraftfahrzeug zur Verfügung steht. Als Antriebsmittel dient ein Antriebsseil. Ein Antriebsseil bietet den Vorteil, dass es leicht umlenkbar ist und zum Beispiel in dem Führungsrohr durch die Karosserie in Richtung der Umlenkeinrichtung leicht führbar ist. Darüber hinaus bietet der Einsatz eines Führungsseils eine kostengünstige konstruktive Lösung, um die elektrische Antriebseinheit an unterschiedliche Bauformen und Größen der Schiebetür anzupassen. Wird beispielsweise mit einem Antrieb gearbeitet und kommt der Antrieb für unterschiedlich breite Türen, das heißt unterschiedlich große Öffnungen im Kraftfahrzeug zum Einsatz, so muss lediglich ein Teil der Führung des Seils ausgetauscht und die Länge des Seils angepasst werden. Es ist somit leicht, die Antriebseinheit an unterschiedliche Anforderungen anzupassen.

Um das Antriebsseil vom Antrieb bis an die Umlenkeinrichtungen zu führen, sind Seilführungen für das Antriebsseil vorgesehen. Eine Seilführung weist erfindungsgemäß ein Führungsrohr auf, das das Antriebsseil durch die Karosserie in Richtung der Baugruppe Seilumlenkung führt. Damit die Antriebseinheit die Schiebetür ordnungsgemäß bewegen kann, sind die Antriebseinheit und die Führung für das Antriebsseil fest im Kraftfahrzeug aufgenommen. Das Antriebsseil wird im Antrieb aufgewickelt, durch die Führungen geführt und im Bereich der Seilumlenkungen aus der Antriebseinheit herausgeführt, so dass es mit der Schiebetür und/oder einem Mittel zum Bewegen der Schiebetür verbindbar ist.

In vorteilhafter Weise bilden die Seilumlenkung und zumindest die von der elektrischen Antriebseinheit beabstandete Baugruppe eine modulare Seilumlenkung. Modular bedeutet hierbei, dass die Seilumlenkung als separates Bauteil an den Antrieb bzw. die Führung für das Antriebsseil anbindbar ist. Ein modularer Aufbau ermöglicht es hierbei, dass die Baugruppe separat montierbar und darüber hinaus an unterschiedliche Begebenheiten im Kraftfahrzeug anpassbar ist. Ein modularer Aufbau bietet somit gleich mehrere Vorteile. Einerseits ermöglicht der modulare und separate Zusammenbau die Möglichkeit, die Seilumlenkung erst nach dem Einbau der elektrischen Antriebseinheit zu montieren, und darüber hinaus den Vorteil einer leichten Anpassbarkeit an unterschiedliche Gegebenheiten in der Kraftfahrzeugkarosserie. Es können somit für einen Antrieb unterschiedliche Module bereitgestellt werden, die als separate Baugruppen an die elektrische Antriebseinheit montierbar sind. Unterschiedliche Module können beispielsweise schon dann zum Einsatz kommen, wenn es in einem Kraftfahrzeug zwei Schiebetüren gibt, so dass ein Modul auf einer Seite des Kraftfahrzeugs und ein anderes Modul auf der entgegengesetzten Seite des Kraftfahrzeugs zum Einsatz kommt. Somit muss nicht die gesamte Baugruppe geändert werden, sondern es kann beispielsweise lediglich zum Austausch der Baugruppe Seilumlenkung kommen.

Bevorzugt weist der Schiebetürantrieb in seinem Grundaufbau ein Antriebsseil auf, das aus der Führung herausragt. In vorteilhafter Weise kann an dem Seilende des Antriebsseils zum Beispiel eine Kugelpfanne befestigt sein, die dann mit einem Antriebsschlitten, der in einer Führungsbahn geführt ist, verbindbar ist.

Da erfindungsgemäß das Seilende in die Seilumlenkung einfädelbar ist, besteht nun die Möglichkeit, am Seilende ein Verbindungsmittel für zum Beispiel einen Schlitten zu montieren. Darüber hinaus bietet das Einführen des Seilendes in die Baugruppe Seilumlenkung den Vorteil, dass das fertig montierte Antriebsseil in die Seilumlenkung einlegbar ist und somit eine konstruktiv einfache Möglichkeit geschaffen ist, eine beabstandete Seilumlenkung für den Schiebetürantrieb bereitzustellen.

In einer bevorzugten Ausführungsform der Erfindung ergibt sich dann ein Vorteil, wenn die Seilführung ein Führungsrohr aufweist und das Führungsrohr ein Haltemittel aufweist. Ein Haltemittel an einem Ende des Führungsrohrs ermöglicht es hierbei, das Führungsrohr sicher mit der Seilumlenkung zu verbinden. Ein Haltemittel kann beispielsweise einstückig an dem Führungsrohr ausgebildet sein und zum Beispiel aus einer Verpressung, Verdickung oder einer Einformung am Führungsrohr gebildet sein. Ist beispielsweise eine Einformung in Form einer Öffnung am Führungsrohr vorhanden, so kann diese Öffnung mit einer Erhöhung oder einem Bolzen an der Seilumlenkung verbunden werden, so dass ein sicheres Fixieren des Führungsrohrs mit der Seilumlenkung gewährleistet werden kann.

Darüber hinaus sind natürlich auch formschlüssige Verbindungen als kooperierende Erhebungen und/oder Vertiefungen zwischen Seilumlenkung und Führungsrohr vorstellbar. Darüber hinaus kann das Haltemittel auch als separates Bauteil mit dem Führungsrohr verbunden sein. Ist beispielsweise das Führungsrohr aus einem metallischen Werkstoff hergestellt, so kann das Haltemittel beispielsweise als Kunststoffspritzteil an das Führungsrohr angespritzt oder mit dem Führungsrohr zum Beispiel in Form einer Passung verbunden sein. Das Haltemittel gewährleistet dabei, dass eine sichere Verbindung zwischen dem Führungsrohr und der Seilumlenkung vorhanden ist.

Dadurch wird einerseits die Lage des Antriebsseils fixiert und andererseits das Antriebsseil sicher durch die Seilumlenkung geführt. Die Seilumlenkung umfasst beispielsweise eine Aufnahme für das Haltemittel, eine Grundplatte und ein an der Grundplatte befestigtes Umlenk- und Führungsrad für das Antriebsseil. Das Haltemittel wird in die Aufnahme der Seilumlenkung eingefügt oder mit der Aufnahme verbunden. Dies bietet gleichzeitig den Vorteil, dass mittels der Ausbildung der Aufnahme in der Grundplatte der Seilumlenkung der Anstellwinkel des Antriebsseils auf das Umlenk- und Führungsrad einstellbar ist. Einerseits kann die Aufnahme einstellbar gestaltet sein, die Aufnahme kann aber auch individuell je Modul der Baugruppe ausgebildet sein, so dass für jede Baugruppe eine Seilumlenkung einsetzbar ist. Durch das Einfügen des Haltemittels in die Seilumlenkung, und insbesondere das formschlüssige Einfügen des Haltemittels in die Seilumlenkung ist eine weitere vorteilhafte Ausgestaltungsform der Erfindung gebildet. In vorteilhafter Weise kann das Haltemittel somit ein sicheres Führen und Positionieren des Antriebsseils gewährleisten.

Erfindungsgemäß ist das Ende des Führungsrohrs und vorteilhaft des Haltemittels mittels eines Oberteils an der Seilumlenkung fixierbar. Durch den Einsatz eines Oberteils zur Fixierung bzw. Lagesicherung des Führungsrohrs und/oder des Haltemittels ist eine weitere Möglichkeit gegeben, einen modularen Aufbau der Umlenkeinrichtung bzw. Baugruppe Seilumlenkung zu realisieren. Je nach eingesetztem Haltemittel und/oder eingesetztem Führungsrohr kann mittels eines individuellen Oberteils, das angepasst an das Führungsrohr bzw. das Haltemittel ausführbar ist, mit einer Seilumlenkung gearbeitet werden, wohingegen unterschiedliche Führungsrohre und/oder Haltemittel an die Seilumlenkung adaptierbar sind. Das Oberteil umschließt dabei das Haltemittel bzw. das Führungsrohr zumindest bereichsweise, aber bevorzugt zumindest größtenteils, so dass ein sicheres Fixieren an der Seilumlenkung gewährleistet werden kann. Vorzugsweise umschließt das Oberteil das Führungsrohr und/oder das Haltemittel um 180° oder mehr. Das Haltemittel bzw. das Führungsrohr ist somit sicher und konstruktiv einfach an der Seilumlenkung befestigbar.

Gemäß der Erfindung ist ein Dichtungsteil derart an der Seilumlenkung montiert ist, dass mittels der Seilumlenkung das Antriebsseil aus der Karosserie des Kraftfahrzeugs herausführbar ist. Mittels des Dichtungsteils kann die Seilumlenkung auch in einem Bereich eingebaut werden, der äußeren Witterungseinflüssen ausgesetzt ist. Dies ist insbesondere dann vorteilhaft, wenn ein optimaler Kraftangriffspunkt für die Schiebetür erzielt werden soll. Dazu kann bevorzugt auch das Umlenk- und Führungsrad von dem Dichtungsteil umfasst sein, so dass das Umlenk- und Führungsrad zumindest in dem vom Dichtungsteil umgebenen Bereich außerhalb der Karosserie angeordnet sein kann. Mittels des Dichtungsteils ist die Seilumlenkung somit optimal zu einem in der Führungsbahn geführten Führungsschlitten ausrichtbar.

Erfindungsgemäß bilden zumindest die Seilumlenkung, das Oberteil und das Dichtungsteil die Baugruppe des Schiebetürantriebs. Mittels der Seilumlenkung ist der Biegeradius des Seils einhaltbar, es kann ein sicheres Führen des Seils gewährleistet werden, und das Seil ist in Bezug auf die Antriebsmittel für die Schiebetür ausrichtbar. Mittels des Oberteils kann ein sicheres Fixieren des Führungsrohr und/oder des Haltemittels erfolgen, und zusätzlich bietet das Dichtungsteil die Möglichkeit, die Baugruppe optimal zum Antriebsmittel der Schiebetür auszurichten. Als Antriebsmittel kann hierbei zum Beispiel ein in der Führungsbahn geführter Führungsschlitten bezeichnet werden.

In einer weiteren vorteilhaften Ausgestaltungsform der Erfindung wird dann ein Vorteil erzielt, wenn die Baugruppe zumindest ein Mittel zur Befestigung der Baugruppe an der Karosserie des Kraftfahrzeugs aufweist.

Die Integration eines Befestigungsmittels in die Baugruppe Seilumlenkung ermöglicht es in konstruktiv einfacher Weise, die komplette Baugruppe unmittelbar an der Karosserie zu befestigen. Dazu kann beispielsweise in das Oberteil oder die Seilumlenkung ein Befestigungsmittel, wie beispielsweise eine Mutter oder ein Gewinde eingelassen oder eingeformt sein. Das Vorhandensein eines Befestigungsmittels in der Baugruppe Seilumlenkung ermöglicht somit ein sehr leichtes und unkompliziertes Befestigen der Baugruppe in der Karosserie des Kraftfahrzeugs. Darüber hinaus stellt die Lösung eine kostengünstige Möglichkeit dar, um die Baugruppe Seilumlenkung sicher zu positionieren und in der Karosserie zu fixieren. Beispielsweise können drei Befestigungspunkte oder mehr an der Baugruppe vorhanden sein.

Erfindungsgemäß weist das Antriebsseil ein Dichtungsmittel auf und bildet das Dichtungsmittel mit dem Dichtungsteil eine Dichteinheit. Ist an dem Antriebsseil, das bereits eine Befestigung oder Aufnahme für den Führungsschlitten aufweisen kann, zusätzlich oder separat das Dichtungsmittel angeordnet, so wird eine einfache konstruktive Lösung für ein Abdichten des Antriebsseils bereitgestellt. Eine am Antriebsseil befestigte Dichtungsmanschette kann beispielsweise unmittelbar am Dichtungsteil befestigt und zum Beispiel über das Dichtungsteil übergestülpt werden, so dass die Möglichkeit geschaffen ist, ein dichtes Anbauen der Baugruppe Seilumlenkung an das Kraftfahrzeug zu gewährleisten. Insbesondere kann somit ein sicheres Abdichten des Antriebsseils in Bezug auf das Kraftfahrzeug gewährleistet werden. Besonders vorteilhaft ist dabei, dass das am Antriebsseilende vorhandene Befestigungsmittel erst nachträglich montiert werden kann, so dass das Dichtungsmittel umfänglich einteilig ausgebildet sein kann und lediglich eine Öffnung zur Durchführung des Antriebsseils aufweisen muss. Somit kann ein Dichtungsmittel bereitgestellt werden, das eine sichere Abdichtung des Antriebsseils ermöglicht.

Das Dichtungsmittel ist in das Dichtungsteil einfügbar, da das Dichtungsmittel erfinderungsgemäß kreisringförmig ausgebildet ist, eine Profilierung am Umfang aufweist und in eine Öffnung des Dichtungsteils eingeschoben ist, wodurch wiederum eine sichere Abdichtung der Baugruppe Seilumlenkung erzielbar ist. Es wird somit ein sicheres Abdichten und zugleich eine konstruktiv einfache Lösung zur Abdichtung der Baugruppe bereitgestellt.

Nachfolgend wird die Erfindung unter Bezugnahme auf die anliegenden Zeichnungen anhand bevorzugter Ausführungsbeispiele näher erläutert. Es gilt jedoch der Grundsatz, dass die Ausführungsbeispiele die Erfindung nicht beschränken, sondern lediglich vorteilhafte Ausgestaltungsformen darstellen.

Es zeigt:
- FIG. 1: eine dreidimensionale Ansicht auf einen Schiebetürantrieb mit einem Führungsrohr und einem aus dem Führungsrohr herausragenden Antriebsseil ohne die Baugruppe Seilumlenkung,
- FIG. 2: ein Detail gemäß II aus FIG. 1 im Bereich des Endes der Seilführung mit dem aus dem Führungsrohr herausragenden Antriebsseilende,
- FIG. 3: eine dreidimensionale Detailansicht auf eine separat dargestellte Seilumlenkung,
- FIG. 4: eine dreidimensionale Ansicht auf die Seilumlenkung mit einem in die Seilumlenkung eingefügten Antriebsseil,
- FIG. 5: eine dreidimensionale Ansicht eines in die Seilumlenkung eingelegten Antriebsseil mit einem auf der Seilumlenkung montierten Oberteil,
- FIG. 6: eine dreidimensionale Ansicht auf ein Dichtungsteil als separates Bauteil der Baugruppe, und
- FIG. 7: eine dreidimensionale Ansicht auf eine Baugruppe Seilumlenkung.

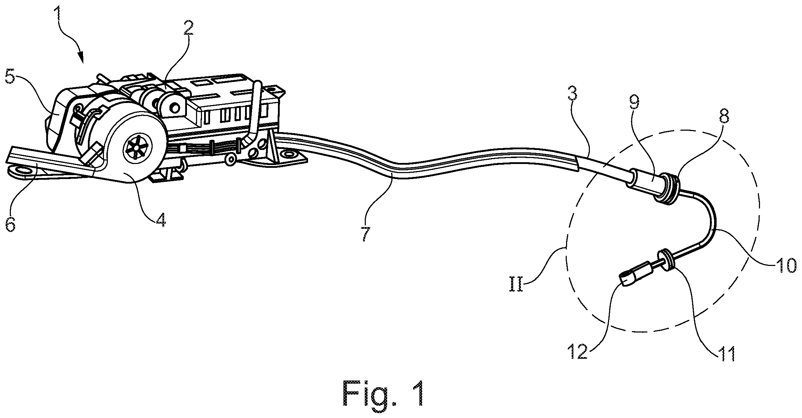

In der FIG. 1 ist eine dreidimensionale Ansicht auf einen lediglich bereichsweise dargestellten Schiebetürantrieb 1 wiedergegeben. Dargestellt ist die elektrische Antriebseinheit 2, das Antriebsseil 10, die Seilführung mit dem Führungsrohr 3 für das Antriebsseil 10, die Wickeltrommel 4, ein Teil des Planetengetriebes 5 und ebenfalls zu erkennen eine Verlängerung 6 an der Wickeltrommel 4, durch die ein weiteres Antriebsseil führbar ist. Der Elektromotor ist in dieser Ansicht rückseitig angeordnet und nicht sichtbar. Das Führungsrohr 3 ist bereichsweise mit einer Kunststoffummantelung 7 versehen. An einem der elektrischen Antriebseinheit 2 entgegengesetzten Ende 8 des Führungsrohrs 3 ist ein Haltemittel 9 befestigt. Aus dem Führungsrohr 3 bzw. dem Haltemittel 9 heraus ragt das Antriebsseil 10, wobei auf dem Antriebsseil 10 ein Dichtungsmittel 11 angeordnet ist und am Ende des Antriebsseils 10 ein Kugelkopf angeordnet ist, der mit einem Führungsschlitten zur Bewegung der Schiebetür gekoppelt ist.

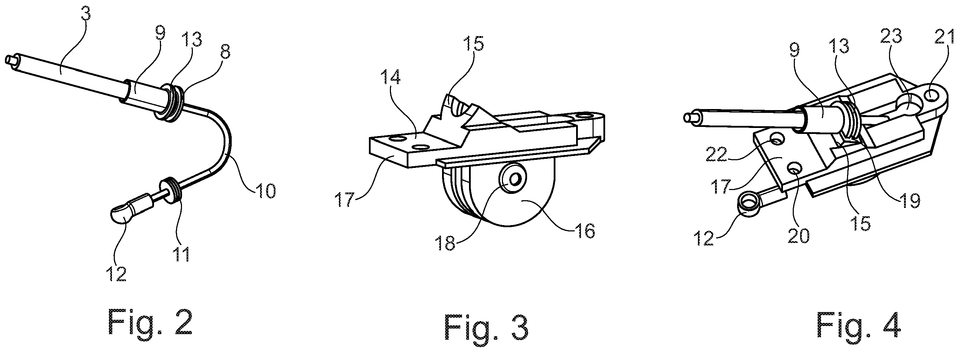

In der FIG. 2 ist ein Detail gemäß II aus FIG. 1 wiedergegeben. Die FIG. 2 zeigt dabei das Ende 8 der Seilführung, wobei die Seilführung in diesem Ausführungsbeispiel das metallische Führungsrohr 3 aufweist. Auf dem Führungsrohr 3 ist das Haltemittel 9 in Form einer Kunststoffbuchse angeordnet, wobei das Haltemittel 9 über zwei kreisringförmige Verdickungen 13 verfügt. Das Haltemittel 9 ist beispielsweise unlösbar mit dem Führungsrohr 3 verbunden. Unlösbar bedeutet hierbei, dass das Haltemittel 9 beispielsweise mit dem Führungsrohr 3 verklebt ist. Selbstverständlich sind auch andere geometrische Ausgestaltungsformen des Haltemittels 9 am Ende 8 des Führungsrohrs 3 ausbildbar, oder das Führungsrohr 3 selbst weist eine Verdickung, Prägung oder Öffnung auf, die mit der Seilumlenkung 14 verbindbar ist. Das auf dem Antriebsseil 10 beweglich befestigte Dichtungsmittel 11 ist in Form einer profilierten Ringscheibe ausgebildet. Das Dichtungsmittel 11 ist somit über das Antriebsseil 10 hinweg bewegbar, wobei das Antriebsseil 10 mittels des Dichtungsmittels 11 gegenüber zum Beispiel eindringender Feuchtigkeit geschützt ist.

Die FIG. 3 zeigt eine Seilumlenkung 14 aufweisend eine Aufnahme 15, ein Umlenk- und Führungsrad 16 sowie eine Grundplatte 17. Wie deutlich zu erkennen ist, kann mittels der Aufnahme 15 der Anstellwinkel des Antriebsseils 10 in Bezug auf das Umlenk- und Führungsrad 16 eingestellt werden. Liegt somit ein größeres Umlenk- und Führungsrad 16 vor, oder wird ein Antriebsseil 10 verwendet, das einen größeren Umlenkradius erfordert, so ist die Aufnahme 15 an das Antriebsseil 10 anpassbar. In diesem Ausführungsbeispiel sind die Grundplatte 17 und die Aufnahme 15 einstückig ausgebildet und können beispielsweise aus Kunststoff oder Metall bestehen. Vorzugsweise werden die Grundplatte 17 und die Aufnahme 15 aus Metall und noch bevorzugter aus Aluminium hergestellt. Darüber hinaus weist die Seilumlenkung 14 ein Lagermittel für das Umlenk- und Führungsrad 16 auf, wobei lediglich eine Achse 18 des Umlenk- und Führungsrads 16 in der FIG. 3 zu erkennen ist.

In der FIG. 4 ist die Kombination aus Seilumlenkung 14 und in die Seilumlenkung 14 eingelegtem Antriebsseil 10 zu erkennen. Deutlich zu erkennen ist, dass das Haltemittel 9 in die Aufnahme 15 und insbesondere die kreisringförmigen Verdickungen 13 in eine Ausnehmung 19 der Aufnahme 15 eingefügt wurden. Das Haltemittel 9 ist somit in der Lage fixiert und in der Aufnahme 15 gehalten. Die Aufnahme 15 umschließt in diesem Ausführungsbeispiel das Haltemittel 9 halbkreisförmig in etwa zu 180°.

In die Grundplatte 17 sind Bohrungen 20, 21, 22 eingefügt oder eingeformt, so dass Befestigungsmittel 25, 26, 27 für die Baugruppe Seilumlenkung 33 durch die Grundplatte 17 hindurchführbar sind. Eine weitere Öffnung 23 in der Grundplatte 17 ermöglicht es hierbei, den Kugelkopf 12 durch die Grundplatte 17 hindurchzuführen und somit das Antriebsseil 10 um das Umlenk- und Führungsrad 16 herumzuführen.

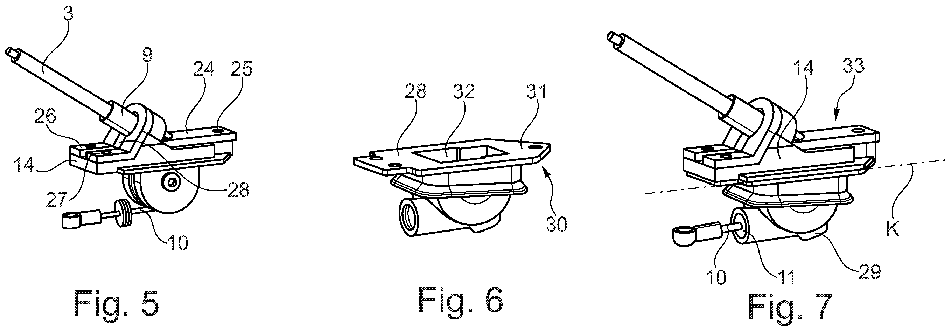

In der FIG. 5 ist eine weitere dreidimensionale Ansicht auf die Seilumlenkung 14 mit dem eingelegten Antriebsseil 10 wiedergegeben. Zusätzlich wurde das Führungsrohr 3 bzw. das Haltemittel 9 mittels eines Oberteils 24 auf der Seilumlenkung 14 fixiert. Das Haltemittel 9 ist somit vollumfänglich auf der Seilumlenkung 14 fixiert, positioniert und lagesicher gehalten. Das Oberteil 24 kann Befestigungsmittel 25, 26, 27 aufweisen, so dass die Seilumlenkung 14, wie auch das Oberteil 24 in einer Kraftfahrzeugkarosserie K fixierbar und montierbar ist. Ein Schlitz 28 ermöglicht es hierbei, dass das Oberteil 24 über das Haltemittel 9 fügbar ist.

In der FIG. 6 ist ein Dichtungsteil 29 als separates Bauteil wiedergegeben. Das Dichtungsteil 29 weist zwei Anlageflächen 30, 31 und eine Öffnung 34 auf. Mittels der Anlagefläche 30 kann das Dichtungsteil 29 gegen eine nicht dargestellte Karosserie K zur Anlage kommen. Die Anlagefläche 31 liegt hingegen gegen die Grundplatte 17 der Seilumlenkung 14 an. In die Einformung 32 ist das Umlenk- und Führungsrad 16 einfügbar.

In der FIG. 7 ist die Baugruppe Seilumlenkung 33 als komplette Baugruppe wiedergegeben. Die Baugruppe Seilumlenkung 33 kommt im eingebauten Zustand gegen eine als Strichpunktlinie angedeutete Karosserie K eines Kraftfahrzeugs zur Anlage. Dabei dichtet das Dichtungsteil 29 die Seilumlenkung 14 ab, wobei das Dichtungsmittel 11 das Antriebsseil 10 dichtend führt, da das ringscheibenförmige Dichtungsmittel 11 in die Öffnung 34 eingeschoben ist. Durch den modularen Aufbau der Baugruppe Seilumlenkung 33 ist somit die Möglichkeit geschaffen, die Baugruppe Seilumlenkung 33 beabstandet zur Antriebseinheit 2 und separat zu montieren. Darüber hinaus bietet die Baugruppe Seilumlenkung 33 mehrere Möglichkeiten, um das Antriebsseil 10 sowie das Führungsrohr 3 an die Baugruppe Seilumlenkung 33 modular zu adaptieren.

### BEZUGSZEICHENLISTE

- 1: Schiebetürantrieb
- 2: elektrische Antriebseinheit
- 3: Führungsrohr der Seilführung
- 4: Wickeltrommel
- 5: Planetengetriebe
- 6: Verlängerung
- 7: Kunststoffummantelung
- 8: Ende des Führungsrohrs
- 9: Haltemittel
- 10: Antriebsseil
- 11: Dichtungsmittel
- 12: Kugelkopf
- 13: kreisringförmige Verdickungen
- 14: Seilumlenkung
- 15: Aufnahme
- 16: Umlenk- und Führungsrad
- 17: Grundplatte
- 18: Achse
- 19: Ausnehmungen
- 20, 21, 22: Bohrungen
- 23: Öffnung
- 24: Oberteil
- 25, 26, 27: Befestigungsmittel
- 28: Schlitz
- 29: Dichtungsteil
- 30, 31: Anlagefläche
- 32: Einformung
- 33: Baugruppe Seilumlenkung
- 34: Öffnung in dem Dichtungsteil
- K: Karosserie

## Patentansprüche

1. Antrieb (1) für eine Schiebetür eines Kraftfahrzeugs, aufweisend
• eine elektrische Antriebseinheit (2),
• ein Antriebsseil (10),
• eine Seilführung für das Antriebsseil (10),
wobei
• die Antriebseinheit (2), das Antriebsseil (10) und die Seilführung fest in einer Karosserie (K) des Kraftfahrzeuges aufgenommen sind;
• die Schiebetür mittels des Antriebsseils (10) gegenüber der Karosserie (K) bewegbar ist;
• zumindest eine Baugruppe (33) der Seilführung modular aufgebaut ist;
• das Antriebsseil (10) über die Baugruppe (33) umlenkbar ist;
• ein Seilende des Antriebsseils (10) in eine Seilumlenkung (14) einfädelbar ist;
• die Seilführung ein Führungsrohr (3) aufweist;
• das Ende des Führungsrohrs (3) mittels eines Oberteils (24) an der Seilumlenkung (14) fixierbar ist;
• ein Dichtungsteil (29) derart an der Seilumlenkung (14) montiert ist, dass mittels der Seilumlenkung (14) das Antriebsseil (10) aus der Karosserie (K) herausführbar ist;
• die Baugruppe (33) die Seilumlenkung (14), das Oberteil (24) und das Dichtungsteil (29) aufweist;
**dadurch gekennzeichnet, dass**
• das Antriebsseil (10) ein Dichtungsmittel (11) in Form einer profilierten Ringscheibe aufweist, das mit dem Dichtungsteil (29) eine Dichteinheit bildet;
• das Dichtungsmittel (11) in eine Öffnung (34) des Dichtungsteils (29) eingeschoben ist.

2. Schiebetürantrieb (1) nach Anspruch 1, **dadurch gekennzeichnet, dass** das Führungsrohr (3) ein Haltemittel (9) aufweist.

3. Schiebetürantrieb (1) nach dem vorigen Anspruch, **dadurch gekennzeichnet, dass** das Haltemittel (9) in die Seilumlenkung (14) einfügbar oder formschlüssig einfügbar ist.

4. Schiebetürantrieb (1) nach einem der vorigen Ansprüche, **dadurch gekennzeichnet, dass** die Baugruppe (33) zumindest ein Mittel (25, 26, 27) zur Befestigung der Baugruppe (33) an der Karosserie (K) aufweist.

## Claims

1. Drive (1) for a sliding door of a motor vehicle, comprising
• an electrical drive unit (2),
• a drive cable (10), and
• a cable guide for the drive cable (10),
• the drive unit (2), the drive cable (10) and the cable guide being fixedly accommodated in a body (K) of the motor vehicle;
• it being possible for the sliding door to be moved relative to the body (K) by means of the drive cable (10);
• at least one assembly (33) of the cable guide being modular;
• it being possible for the drive cable (10) to be deflected by means of the assembly (33);
• it being possible for a cable end of the drive cable (10) to be threaded into a cable deflector (14);
• the cable guide comprising a guide pipe (3);
• it being possible to fix the end of the guide pipe (3) to the cable deflector (14) by means of an upper part (24);
• a sealing part (29) being mounted on the cable deflector (14) such that the drive cable (10) can be guided out of the body (K) by means of the cable deflector (14);
• the assembly (33) comprising the cable deflector (14), the upper part (24) and the sealing part (29);
**characterized in that**
• the drive cable (10) comprises a sealing means (11) in the form of a profiled annular disk, which forms a sealing unit together with the sealing part (29); and
• the sealing means (11) is pushed into an opening (34) in the sealing part (29).

2. Sliding door drive (1) according to claim 1, **characterized in that** the guide pipe (3) comprises a holding means (9).

3. Sliding door drive (1) according to the preceding claim, **characterized in that** the holding means (9) can be inserted, or can be inserted in an interlocking manner, into the cable deflector (14).

4. Sliding door drive (1) according to any of the preceding claims, **characterized in that** the assembly (33) comprises at least one means (25, 26, 27) for fastening the assembly (33) to the body (K).

## Revendications

1. Entraînement (1) destiné à une porte coulissante d'un véhicule automobile, présentant
• une unité d'entraînement électrique (2),
• un câble d'entraînement (10),
• un guide-câble destiné au câble d'entraînement (10),
dans lequel
• l'unité d'entraînement (2), le câble d'entraînement (10) et le guide-câble sont logés de manière fixe dans une carrosserie (K) du véhicule automobile ;
• la porte coulissante peut être déplacée par rapport à la carrosserie (K) au moyen du câble d'entraînement (10) ;
• au moins un ensemble (33) du guide-câble est de conception modulaire ;
• le câble d'entraînement (10) peut être dévié par l'ensemble (33) ;
• une extrémité de câble du câble d'entraînement (10) peut être enfilée dans une déviation de câble (14) ;
• le guide-câble présente un tube de guidage (3) ;
• l'extrémité du tube de guidage (3) peut être fixée à la déviation de câble (14) au moyen d'un élément supérieur (24) ;
• un élément d'étanchéité (29) est monté sur la déviation de câble (14) de telle sorte que le câble d'entraînement (10) peut être conduit hors de la carrosserie (K) au moyen de la déviation de câble (14) ;
• l'ensemble (33) présente la déviation de câble (14), l'élément supérieur (24) et l'élément d'étanchéité (29) ;
**caractérisé en ce que**
• le câble d'entraînement (10) présente un moyen d'étanchéité (11) sous la forme d'une rondelle profilée qui forme une unité d'étanchéité avec l'élément d'étanchéité (29) ;
• le moyen d'étanchéité (11) est inséré dans une ouverture (34) de l'élément d'étanchéité (29).

2. Entraînement de porte coulissante (1) selon la revendication 1, **caractérisé en ce que** le tube de guidage (3) présente un moyen de maintien (9).

3. Entraînement de porte coulissante (1) selon la revendication précédente, **caractérisé en ce que** le moyen de maintien (9) peut être introduit, ou peut être introduit par complémentarité de forme, dans la déviation de câble (14).

4. Entraînement de porte coulissante (1) selon l'une des revendications précédentes, **caractérisé en ce que** l'ensemble (33) présente au moins un moyen (25, 26, 27) destiné à fixer l'ensemble (33) à la carrosserie (K).
